# EUROPEAN PATENT SPECIFICATION

(11) **EP 2 659 198 B1**
(45) Date of publication and mention of the grant of the patent: **22.04.2015**
(21) Application number: 11770041.9
(22) Date of filing: 28.09.2011
(51) Int. Cl.: F03G 6/00, F03G 7/04, F24J 2/04, F24D 19/10, F24J 2/26, F24J 2/46, F24J 3/08, F25B 27/00, F24J 2/50

(54) **THERMAL SOLAR ABSORBER SYSTEM GENERATING HEAT AND ELECTRICITY**
SOLARTHERMISCHES ABSORBERSYSTEM ZUR ERZEUGUNG VON WÄRME UND ELEKTRIZITÄT
SYSTÈME ABSORBEUR SOLAIRE THERMIQUE GÉNÉRANT DE LA CHALEUR ET DE L'ÉLECTRICITÉ

(30) Priority: 28.09.2010 DK 201070411
(43) Date of publication of application: 06.11.2013
(73) Proprietor: Innogie ApS, 7430 Ikast (DK)
(72) Inventor: HANSEN, Kristian Harley, DK-7400 Herning (DK)
(74) Representative: Plougmann & Vingtoft A/S
(86) International application number: PCT/DK2011/050363
(87) International publication number: WO 2012/041323

(56) References cited:
- EP-A1- 0 070 757
- WO-A1-2006/072433
- WO-A2-2009/100924
- DE-A1- 2 700 714
- DE-A1- 19 747 592
- DE-A1-102006 042 888
- FR-A1- 2 291 462
- GB-A- 2 402 999
- US-A- 2 782 996
- US-A- 4 103 493
- US-A- 4 261 331
- US-A- 4 307 942

## Description

### FIELD OF THE INVENTION

The invention relates to the field of solar power, especially systems for using solar power for heating hot water for a household, heating houses and delivering electricity for a house. The solution according to the invention show how a solar absorber can be fully integrated into a roofing solution and how a number of related technologies can ensure an intelligent operation yielding the advantages described above.

### BACKGROUND OF THE INVENTION

Alternative sources of energy have been investigated and utilized to some extend for many years. However the fast increasing awareness of the change of the global climate has put an extreme focus onto developing and utilizing new and more effective sources of energy. More and more international conferences deal with solutions for the looming climate problem that the world is facing. Green technologies can provide solutions to the challenges posed by the climate changes.

A factor in favour of solar thermal systems is that unlike other renewable energy systems, it is considered a proven and tested technology by consumers, but still lack to prove value creation to the end-users. However, the present state of systems based on solar energy appear to suffer from one or more drawbacks such as lack of power adequacy, poor design and poor profitability.

The roof is in many cases the most noticeable part of a house from a distance. Having thermal solar panels or photovoltaic panels partly covering the roof, is the traditional way to utilize the energy from the sun domestically. Usually, this leads to a decrease in the value of the house simply from the fact that people do not find current solutions aesthetically attractive.

Prior art solutions for providing renewable energy based on solar power include two main areas; thermal solar systems for heating purposes and photovoltaic solar systems for electricity production. The thermal solar solutions are traditionally aimed at heating water for use in the household. Larger systems of this kind can also include heating of the household. Thermal solar absorbers are usually divided into two types: flat plate and vacuum tube. The flat plate absorber is normally based on an absorber consisting of black dyed copper or aluminium plate with attached copper piping. The absorber is covered with glazing on the front and thermal insulation on the back to reduce heat loses from the system. A liquid is circulated through the pipes with a circulation pump in order to transport the heat from the absorber to the heat storage for later use in the household. The vacuum tube absorber uses a vacuum inside a single or double walled glass tube instead of traditional thermal insulation in order to reduce heat loss. The vacuum tube absorber uses either heat pipes or U-pipes to transport the absorbed heat to a manifold wherefrom the heat is transported to the heat storage.

The solar photovoltaic systems are traditionally based on crystalline silicon cells connected in series creating a solar panel. Accounting for a smaller but increasing market share thin-film solar cells (TFSC) are also to be mentioned. The photovoltaic technology transforms certain spectrums of the solar radiation into electricity and the rest into heat, which in this regard is considered as loss. The electricity generated by the panels is utilized either directly in the household, stored in a local battery compartment or sent back through the electrical grid.

DE 10 2007 020 230 A1 describes a solar collector comprising a container creating a cavity that has a boundary facing the solar source made of a material which is transparent to solar radiation. The cavity has a heat-transfer medium consisting of a liquid possessing a high heat absorption capacity. Especially, the container can be made of plastic and/or glass, and the heat-transfer medium may be a black liquid.

JP 56-124852 A describes a solar heat collector constituted by installing a heat collecting plate having a heating medium passage in an outer case, providing a transparent plate on the surface and disposing between the heat collecting plate and the transparent plate a transparent V-shaped groove transmitting body formed of film of a resin of ethylene fluoride series having a film thickness of 100-1 µm.

FR 2 896 858 A1 describes a plant with atmospheric sensors placed under a solar collector connected to a heat pump. A circulator sets the solar collector in direct relation with a medium to be heated, e.g. in a water tank, and the heat pump stops the circulation of liquid when solar radiation is sufficient. The heat pump permits the circulation of liquid when the solar radiation is insufficient.

US 4,103,493 a method and apparatus for use of solar energy. The method and apparatus has the advantage and benefit of providing for use of all collected solar energy, whether or not there is an immediate need in the home for heating. Solar energy is also used for cooling a home or existing building structure via utilization of a heat pump system. The apparatus comprises in combination a direct boil solar collector which boils a refrigerant therein, a Rankine cycle engine for converting heat energy transferred to said refrigerant to kinetic energy, a generator, a heat pump system, and means connected to the Rankine cycle to selectively transfer said kinetic energy from the Rankine engine to the generator or the heat pump. Excess energy not utilized for heating or cooling the home system is returned to a utility power grid for a credit for the home owner and immediate redistribution by the utility to other users.

WO 2009/100924 discloses a heating system producing electric energy based on thermodynamic energy e.g. by an Organic Rankine Cycle process. The document discloses all the features of the preamble of claim 1. The system is controlled by an energy management system taking into account different process parameters and estimated conditions.

### SUMMARY OF THE INVENTION

To conclude, there is a need for a thermal solar power system capable of fully supporting energy needs of a normal dwelling in the Nordic climate. Still, the solution should be aesthetically acceptable.

A first aspect of the invention provides a solar power system for supplying energy to a building according to claim 1,

Such a solar power system is advantageous, since it can be designed using low cost components. Due to the intelligent controller, it is possible to control the system to provide an efficient operation allowing preferred embodiments to provide heat, hot water and electricity at a rate covering the energy needs of a normal household throughout the year in a Nordic climate. Taking into account actual working conditions of the system as well as predicted conditions, e.g. based on weather forecasts etc., the efficiency of the system can be significantly improved compared to existing systems. Still, the solar absorber powerful enough to power the entire household can be integrated in the roof construction of a normal house without destroying the general appearance of the house.

The intelligent controller can be implemented in various ways, using different types of processors or microcomputers running a software algorithm serving as control algorithm for the system. Such ways of implementing the hardware of the intelligent controller is known by the skilled person. In preferred embodiments, the intelligent controller is arranged to receive a plurality of data inputs, e.g. including an internet connection, and generate a plurality of control signals so as to control operation of various elements of the system, thereby allowing change between different modes of operation based on sensing of the current working conditions of the system and also taking into account predicted conditions, e.g. based on weather forecast data received by.

Preferably, the control algorithm is specially adapted to the specific solar power system design, e.g. with respect to predetermined temperature ranges or weather conditions, e.g. forecasts, where changes between different modes of operation should be initiated. In the following, various embodiments will be described, where the intelligent controller controls various valves and pumps taking input data from various sensors, thus providing an efficient operation of the solar power system without any interaction required by the user, even under very different operating conditions. Especially, the intelligent controller can handle intelligent control of circulation of the absorber liquid through the solar thermal absorber and/or through a radiator system, e.g. in the form of a geothermal hose or an air vented radiator, thus allowing efficient energy supply during different weather conditions, during summer as well as during winter in spite the very different external conditions provided here, e.g. in a Nordic climate.

The core system may include at least two different means for extracting energy from the absorber system, and the intelligent controller is then arranged to switch between the at least two different means for extracting energy from the absorber system based on current and predicted conditions. E.g. the extracting means include a heat storage with a heat exchanger, and an electric generator circuit adapted to be driven by heat from the absorber liquid. Other possibilities for such means are described throughout the description together with the way these means are controlled by the intelligent controller.

In preferred embodiments, the absorber system is integrated directly on top of the carrying structure and isolation of a normal roof construction. With a transparent top panel, such as one, two or three layers of glazing or polymeric panels, the absorber system can be used to cover the entire roof of a building, since it is possible to provide a uniform look of the roof. By utilizing the entire rooftop for energy production through solar energy absorbers, one is effectively merging the roofing industry and the solar panel industry. Both solar panels and roofing are established products, but combining the benefits of the two products creates an innovative product. The installation time of the absorbers will be comparable with installation of the current roofing solution. The integration of the absorbers into the rooftop is reducing the overall system cost compared to retrofitting traditional aftermarket solar absorbers, by removing the need for traditional roofing and insulation.

In some embodiments, the solar thermal absorber is formed by a number of linked transparent liquid containers in combination with a colored absorber liquid, however other non-transparent absorber types may be used. In case of transparent absorbers, the system can be provided by an inherent safety feature, since overheating in case of circulation pump failure can be eliminated in case a thermo-chromatic absorber liquid is used. The transparent absorber and other parts of the absorber system structure do not absorb large amounts of solar energy, and thus do not provide any damage. Especially, a light reflecting panel, e.g. of polished metal, can be placed below the liquid absorber to further ensure a low heat absorption in case of failure. Thus, in some embodiments, a transparent absorber is arranged between a light reflector and a transparent upper panel. Preferably, the top panel and the light reflector are both substantially plane and are supported such that the transparent liquid container is placed in the air space between the two panels. This space preferably also leaves space for the necessary piping for interconnection of the liquid container(s) and circulation system.

The transparent liquid container may comprise one or more liquid container elements in the form of a flexible polymeric structure, such as Ethylene TetraFluoroEthylene (ETFE). Such embodiment is suitable to mount as a roof construction in sections each having its separate liquid container element and a separate transparent top panel, a distance between such panels being determined based on the desired point or surface load of the construction. Especially, the liquid container element may have a flat liquid containing portion arranged between a liquid input and a liquid output. Preferably, the liquid container has a simple substantially rectangular shape so as to fit the space below rectangular top panels without any loss of area. Each liquid container element preferably has a simple single chamber without any structures that disturb the flow of absorber liquid from the liquid inlet in one end to liquid outlet in the opposite end. Preferably, the liquid inputs and outputs of the elements are placed centrally at the short ends of the substantially rectangular shapes.

In other embodiments, the solar thermal absorber is non-transparent, e.g. in the form of polymeric or metallic type absorber elements with a coloured surface, e.g. black or coated with a selective coating so as to provide a high solar absorption and at the same time provide a low energy emission, so as to effectively capture solar energy and thermally transfer the energy to the absorber liquid. In such cases, the absorber liquid may be any type of liquid, e.g. water, such as water with one or more additives.

In one embodiment, the solar thermal absorber comprises an absorber plate, such as a metal plate, with a surface arranged to absorb solar energy, and wherein a pipe is attached to the absorber plate so as to provide thermal contact with the absorber plate in order to transfer absorbed energy to the absorber liquid when flowing through the pipe. Specifically, the absorber plate may be made of aluminium, and wherein the pipe is attached to the absorber plate by means of welding, such as ultrasound welding. More specifically, the pipe may be made of an aluminium alloy.

The core system may include a hot water supply system in connection with the core system and arranged to heat up water to be supplied to the building. The core system may be arranged to transfer the energy to a liquid in an accumulator tank, such as to a water tank. Especially, the system may comprise means for heating the building using the extracted energy in the core system. This extends the usage from just supplying hot water to the building to also heating the rooms of the building.

A heat pump may use the absorber system as a passive radiator under conditions where the temperature of the heated liquid leaving the absorber is too low for direct heating the liquid in the accumulator tank. This enables the system to produce energy even during period with these undesirable conditions.

In preferred embodiments, the absorber system and a radiator system, e.g. a radiator system including a geothermal hose, are connected to one common heat storage, e.g. an accumulator water tank. Especially, a waste heat recovery system may also be connected to both of the absorber system and the radiator system, and possibly also to the common heat storage. A synergetic effect between the solar absorber system and a geothermal hose connected as a heat pump can be achieved, since the soil surrounding the geothermal hose can be used to store surplus energy generated by the solar absorber system which would otherwise require a much larger and space requiring accumulator tank.

The system may comprise means for storing the extracted energy in the core system such that surplus extracted energy can be stored and used later, e.g. surplus energy extracted during day time can be stored and used during the following night, such as the energy storage system including a hot-water tank. This is one way for handling the energy inside the core system. Thus, in preferred embodiments, the core system is arranged to transfer the energy to a liquid in an accumulator tank, such as to a water tank. Such tank forms a heat storage enabling improved energy efficiency of the system. A heat exchanger may be used to transfer energy from the absorber liquid to the liquid in the accumulator tank. When surplus energy is available from the absorber system, e.g. when the generated energy exceeds the energy needed to heat the building, then the accumulator tank can be used to store the surplus energy. The energy in the accumulator tank can then be used for hot water supply, or for heating.

Surplus energy extracted in the core system is utilized for driving an electrical power generator arranged to generate electric power in response to the surplus energy, such as electric power to be used in the building and/or sent to an external receiver such as a local electrical power distributor. The electrical power generator comprises Organic Rankine Cycle (ORC) generator driven by a scroll or spiral compressor element connected to drive a rotary type electric generator so as to generate electric power, and wherein the electric generator is arranged to selectively serve as an electric motor to drive the scroll or spiral compressor element upon application of an electric drive current. Hereby one single unit can be used as a heat pump, i.e. as a traditional scroll compressor driven by an electric motor, under some operating conditions. Under different operating conditions, the same unit can be used to generate electricity, i.e. where the scroll compressor element is driven as a volumetric organic Rankine cycle that delivers a torque to the electric motor which in this case serves as electric generator. For a normal dwelling, space is limited, and with a combined heat pump and electric power generating device in one single ORC module, space is saved compared to similar solutions requiring dedicated separate machinery.

In some embodiments, the intelligent controller is arranged to control a plurality of valves, so as to switch between first and second modes of operation of the ORC generator, wherein the ORC generator generates electricity in the first mode of operation, and wherein the ORC generator serves as a compressor to drive a flow in a heat pump system comprising a condenser and a radiator, such as a geothermal hose, in the second mode of operation. This is advantageous, since it allows different modes of operation summer and winter. During summer, the system can be controlled so as to provide a low temperature in the soil by circulating the absorber liquid through the geothermal hose and through the solar thermal absorber during night time, thus utilizing the geothermal hose to cool the soil. In this way, a higher energy efficiency can be obtained during daytime. During autumn, the ORC generator can no longer generate electricity, and the intelligent controller may then shift towards another goal, namely to accumulate as much heat in the soil using the geothermal hose, as soon as a heat storage tank has been heated. By heating the soil during autumn, a higher soil temperature is ensured during winter, and thus the efficiency of the geothermal hose as a heat pump during winter is significantly improved. Surplus energy from the solar thermal absorber is simply stored as an elevated temperature of the soil. To obtain a similar heat pump effect with a traditional geothermal hose system, a significantly longer and thus more expensive geothermal hose is required.

A key aspect is converting the relative low temperature solar absorber fluid into electricity. Because of the large amount of surplus energy low efficiencies can be feasible as long as manufacturing costs are kept at a minimum. Compared to commercial available solar cells with efficiency ratings of 16-18 % the heat to power conversion process of the presented roof can be less efficient and still provide enough energy on an annual basis because of the larger absorber area. The average annual electricity consumption for a household with 4 people and 150 m² living area is 5090 kWh according to Danish authorities (in Danish "Energitjenesten"). Based on solar intensity calculations this number can be achieved with a conversion efficiency of only 5.3 % based on the 80 °C output with an effective absorber area of 130 m². Having 15-30 times larger absorber area than traditional systems, the roofing solution provides sufficient power on an annual basis to cover the need of heat and electricity of an average household of 4 people. Because of the large absorber area a massive energy production in the sunniest periods can lead to very high internal system pressure and boiling if the circulation pump should fail. These problems are addressed by another aspect focusing on safety mechanisms. In surplus periods with no need for heating, scroll expanders are used at sub 100 °C in an ORC to generate electricity. The cycle is expected to have an overall efficiency of at least 5.5 %, preferably more.

Preferably, the solar power system is arranged to supply all of: hot water, heating energy, and electric energy to the building. Traditionally households get electricity from one supplier, heating from another supplier and perhaps either a part of the electricity or heat from a domestic renewable power system. With the energy supplied by the present invention, the household can limit the energy supplier to one and all their energy usage will be from a renewable source. The invention does not affect the customer's habits regarding shelter, heat or electricity. They still get a roof over their heads, get electricity from the outlets and adjust the heat on the radiator or electrical heater.

Preferably, the intelligent controller uses conditions comprising at least one of: current air temperature, current solar intensity, current angle towards the sun, and predicted weather conditions such as a weather forecast. Especially, the intelligent controller may take data about the current conditions and the predicted conditions and determines based thereon a method for extracting and/or storing energy, such as when to start using the heat pump to extract energy and store the energy in appropriate time before periods with poor conditions for extracting energy, e.g. during a freezing dark night. More specifically, the heat pump function may be implemented by equipment comprising a pump for transporting a liquid, such as the absorber liquid, through a radiator. This radiator preferably comprises a geothermal hose, as already mentioned. However, the radiator may additionally or alternatively be an air vented radiator type.

For embodiments, where the thermal solar absorber is transparent, the absorber liquid preferably comprises water and a chromatic additive arranged to absorb solar energy. The chromatic additive preferably comprises a thermo-chromatic additive, such as a black colored leuco dye, that switches from a solar energy absorbing state to a transparent state when a temperature exceeds more than 80 °C, such as more than 90 °C. Hereby safe operation without any breakdown can be provided because overheating, e.g. by a failure in the circulation system, can be avoided because the heat absorbing element in the absorber liquid is disabled. With a limit temperature of such as 80-90 °C, the absorber liquid can be stopped from boiling.

An alternative or additional further safety feature can be provided, if the absorber system comprises a transparent upper panel with a thermo-chromatic coating arranged to switch between a high transparency at lower temperatures and a low transparency state, such as reflective, at higher temperatures, such as above 80 °C. Thus, the transparency of the upper panel is reduced in case of overheating, thus reducing the solar energy reaching the absorber liquid.

A transparent upper panel of the absorber system may comprise one, two, three or more layers of glazing, such as the transparent upper panel being in the form of a layered polycarbonate. Hereby a low loss of energy through the top panel can be provided. To further ensure a low energy loss, the system may further comprise an insulating layer below the solar thermal absorber forming a roof insulation of the building below the absorber. Since such insulation will normally always be present in a normal building, an additional insulating layer is saved.

The system may include a feature that will help to increase the energy performance during winter, namely the intelligent controller being arranged to automatically enter a mode of operation so as to remove snow from an upper panel of the absorber system, by circulating a pre-heated liquid through the solar thermal absorber. The intelligent controller may be designed such that it will only initiate this action if the weather after the nightly snowfall is inadequate for heat production with/without the heat pump. Detection of snow may be based on a weather forecast or by an optical detector and/or force sensor detecting an increased load on the upper panel.

Preferably, the intelligent controller is operationally connected to a plurality of sensors so as to sense the current operating conditions, wherein the sensors comprises at least one internal sensor and one external sensor. In preferred embodiments, the system comprises a plurality of internal sensors including at least one of: a switch to sense a valve position, a temperature sensor to sense a temperature at a position in the core system, a speed control to sense a speed of a pump in the core system, and a pressure gauge to sense a pressure at a position in the core system. Further, the system may include a plurality of external sensors including at least one of: an outside temperature sensor, a pyranometer, a hygrometer, a rain sensor, a barometer, and an anemometer. Such sensors will allow a control algorithm in the intelligent controller to take into account current temperature and other current parameters of the system, and in combination with external sensors, the control algorithm can be designed to predict future operating conditions, and thus initiate actions, e.g. change of mode of operation accordingly, so as to improve energy efficiency.

For example, the intelligent controller may operate the solar power system with respect to conditions comprising at least one of: current air temperature, current solar intensity, current angle towards the sun, and predicted weather conditions such as based on a weather forecast.

In some embodiments, the intelligent controller is arranged to control the system so as to store heat produced by the absorber system in a heat storage, such as an accumulator water tank, when a sensed outlet temperature of the absorber liquid is within a predefined interval, e.g. 55-75 °C. When the absorber liquid outlet temperature is sensed to be higher, e.g. 75-100 °C, the intelligent controller may enter an electric power generating mode of operation. When the absorber liquid outlet temperature is lower, e.g. 0-55 °C, the intelligent controller may utilize the absorber system as a heat pump to raise a temperature in a heat storage.

In situations, where the intelligent controller senses the need for removing ice or snow from the absorber system, the intelligent controller may initiate a circulation of the absorber liquid through a geothermal hose or through a heat storage, e.g. accumulator water tank, to provide the required heat.

The intelligent controller may be arranged to enter a safety mode of operation in which the absorber liquid is circulated through a geothermal hose and/or a heat storage to prevent overheating. The safety mode of operation may be activated when the outlet temperature of the absorber liquid is sensed to exceed a predetermined temperature, e.g. 100 °C.

During nights in the summer time, the intelligent controller may enter a mode of operation where the absorber liquid is circulated through a geothermal hose and/or a heat storage to cool the soil around the geothermal hose.

During autumn and winter, the intelligent controller may be arranged to enter a mode of operation where the absorber liquid is circulated through a geothermal hose to heat up the soil around the geothermal hose, e.g. upon sensing that a temperature in a heat storage, e.g. accumulator water tank, has reached a predetermined value.

The solar power system of the invention is suitable for a roof structure for a building, such as for a dwelling, where the roof structure comprises a carrying structure, an insulating layer, and wherein the absorber system is mounted above the insulating layer, such as mounted directly on top of the insulating layer, and wherein the solar thermal absorber is arranged below a transparent upper panel. Especially, substantially the total area of the roof of the building is covered by the transparent upper panel, hereby providing an aesthetically acceptable integration of the solar absorber in the roof construction of the building, in contrast to existing add-on absorber systems.

### BRIEF DESCRIPTION OF THE DRAWINGS

Embodiments of the invention will be described, by way of example only, with reference to the drawings, in which
Fig. 1 illustrates basic elements of a solar power system embodiment,
Fig. 2 illustrates elements of a preferred solar power system embodiment,
Figs. 3-6 illustrate system diagrams for an embodiment under different operating conditions,
Fig. 7 illustrates an example of the exterior of the roofing solution,
Fig. 8 illustrates a possible mounting of transparent upper panels of a roofing,
Fig. 9 illustrates a system where a common heat storage and Waste Heat Recovery system is used with a combination of solar absorbers and a radiator formed by a geothermal hose,
Figs. 10-16 illustrate system diagrams for a combined solar absorber and geothermal hose system in different modes of operation, and
Fig. 17 illustrates a possible design of a compressor/expander module based on a scroll compressor connected to a rotary machine that can function both as an electric motor and an electric generator
Fig. 18 illustrates a sketch of a thermal solar absorber system embodiment, seen from below, with four absorber panels connected to a common inlet and outlet piping, and
Fig. 19 illustrates the absorber system of Fig. 18, seen from above, and wherein the absorber panels are mounted in a roof of a building.

### DESCRIPTION OF EMBODIMENTS

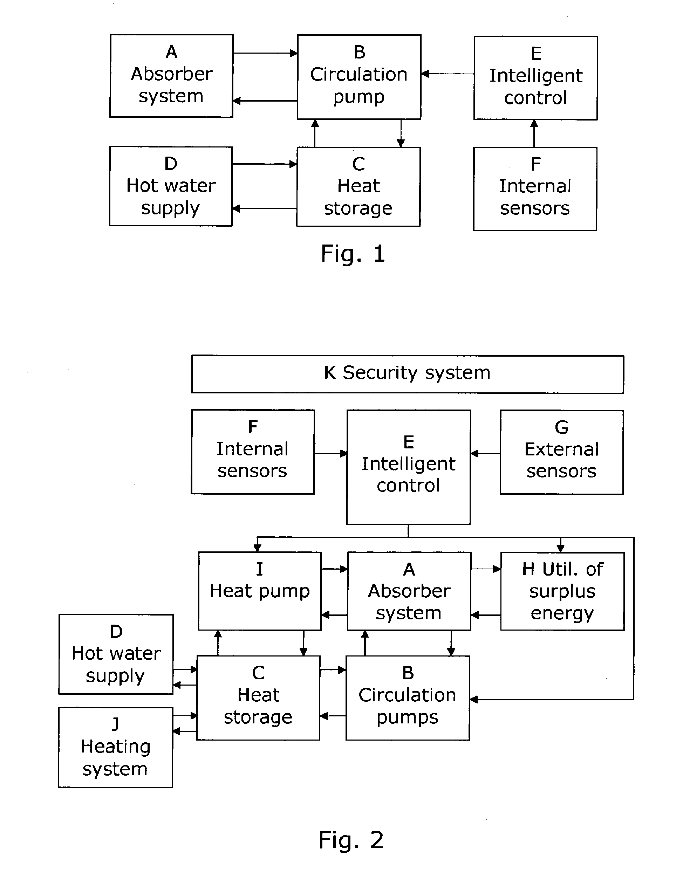

Fig. 1 shows elements of a system where an absorber system A with a thermal solar absorber is connected with a circulation system comprising a circulation pump B controlled by an intelligent controller E taking input from one or more internal sensors F. The circulation system B circulates the absorber liquid, e.g. through a heat exchanger, to a heat storage C which is connected to a hot water supply D. Given input from the sensors F, the intelligent controller E runs a control algorithm serving to optimize utilization of the energy provided by the absorber system A by controlling valves and circulation pumps B to circulate the absorber liquid so as to deliver energy to hot water supply D, if required, or to the heat storage C as.

Fig. 2 illustrates a more detailed diagram of a preferred embodiment, Apart from the elements A-F already described and shown in Fig. 1, the system comprises external sensors G generating inputs to the intelligent controller E, a system for utilization of surplus heat H e.g. including an electric power generator, a heat pump I, and it is illustrated how the heat storage C is also connected to a domestic heating system J. Finally, the diagram illustrates a security system which may be arranged to monitor the operating conditions of the various subsystems. Further, the entire system is monitored by a security system K, e.g. in practical implementations combined or integrated with the intelligent controller E which has the required sensor inputs from sensors F, G to detect possible fault requiring conditions, e.g. overheating, and initiate a security mode of operation by controlling pumps and/or valves accordingly.

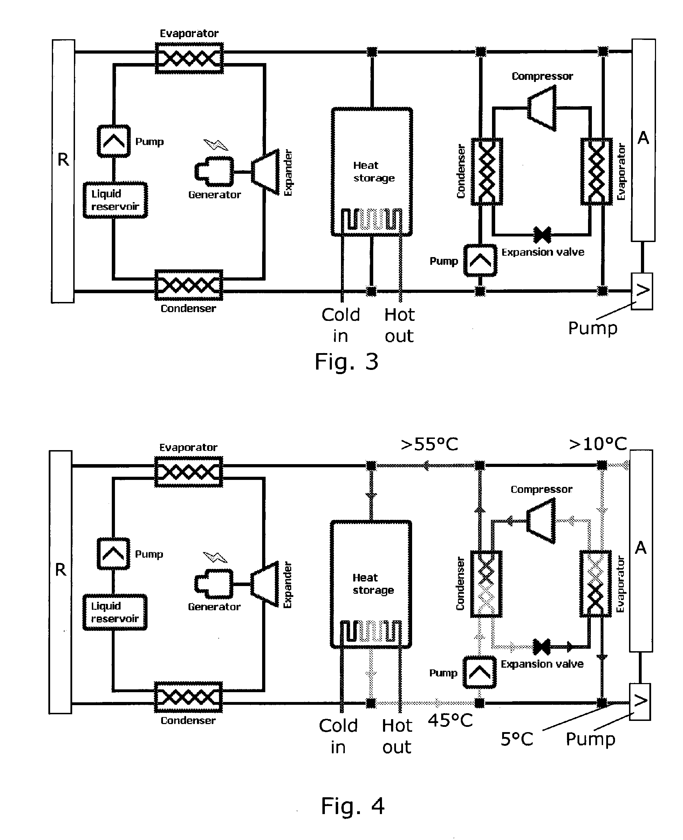

Fig. 3 illustrates a system diagram for an embodiment under the conditions "no flow". A solar thermal absorber A and a radiator system R are interconnected to one common heat storage, e.g. an accumulator water tank which generates hot water and/or water for heating by means of a heat exchanger transferring energy from the heat storage liquid to liquid running between the inlet Cold in and the outlet Hot out. The intelligent controller is not shown for simplicity, but it is to be understood that is operationally connected to control valves, shown as black squares, and the three pumps. A separate circuit serves to provide electricity, namely an expander driving an electric generator, and it is connected to the general circuit via an evaporator and a condenser. A separate heat pump circuit with a compressor is also connected with the general circuit via an evaporator and a condenser.

The following three figures serve to illustrate how the intelligent controller can operate the system in different modes, determined by temperature sensor inputs, also possibly also other data inputs such as weather forecasts directly tapped from an online internet connection, and/or simply by time input so as to determine what time of year, so as to discriminate between summer and winter operations. Arrows indicate flow directions in the system.

Fig. 4 illustrates the same system diagram as in Fig. 3, but during a winter configuration, e.g. where an outlet temperature of the absorber liquid from the absorber system A is less than 55 °C. In this configuration, the heat pump circuit is enabled using the absorber system A on the roof as a passive radiator. The heat pump system includes:
- One heat exchanger working as an evaporator for the refrigerant. The refrigerant gets evaporated by the added energy from the absorber A.
- One heat exchanger working as a condenser for the refrigerant. The refrigerant gets condensed by the outlet from the heat storage.
- One expansion valve turning the refrigerant into gas form.
- One compressor, preferably scroll compressor, turning the refrigerant gas into liquid form.

Two circulation pumps ensure two separated flows - one circulating the absorber liquid between the absorber A and the evaporator, and the other pump circulating liquid between the heat storage and the condenser.

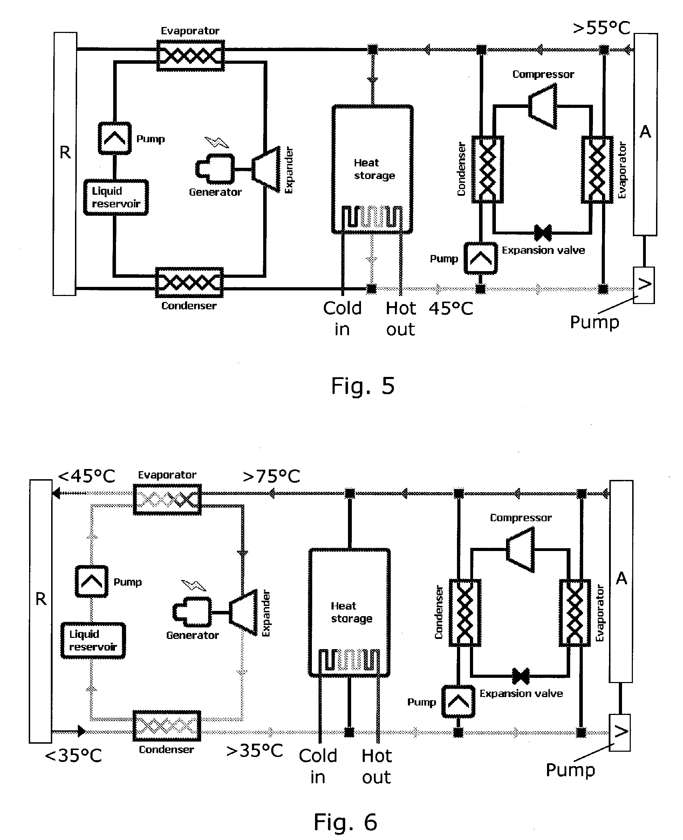

Fig. 5 illustrates, still for the same system, a configuration during normal conditions, i.e. where an outlet temperature is above 55 °C, e.g. between 55 °C and 80 °C. In this configuration the heat pump circuit is bypassed. Instead, one circulation pump will ensure flow between the absorber A and the heat storage.

Fig. 6 illustrates a configuration where the outlet temperature is 80 °C or higher. In this configuration the heat pump and the heat storage are bypassed, and the power generation unit is put into operation. One circulation pump ensures flow between the absorber A and the power generation unit. The power generation unit comprises:
- One heat exchanger working as an evaporator for the working fluid.
- One heat exchanger working as a condenser for the working fluid.
- One external radiator R between the two heat exchangers that cools down the solar liquid in order to maximize the temperature difference between them, thereby increasing the efficiency.
- One expander, e.g. a scroll expander, turning the temperature difference/pressure difference of the working fluid into work.
- One circulation pump to transfer the working fluid into the evaporator.
- One liquid reservoir to ensure that the working fluid is completely transformed into liquid form before reaching the circulation pump.
- One AC generator to transform the work from the expander into electricity.

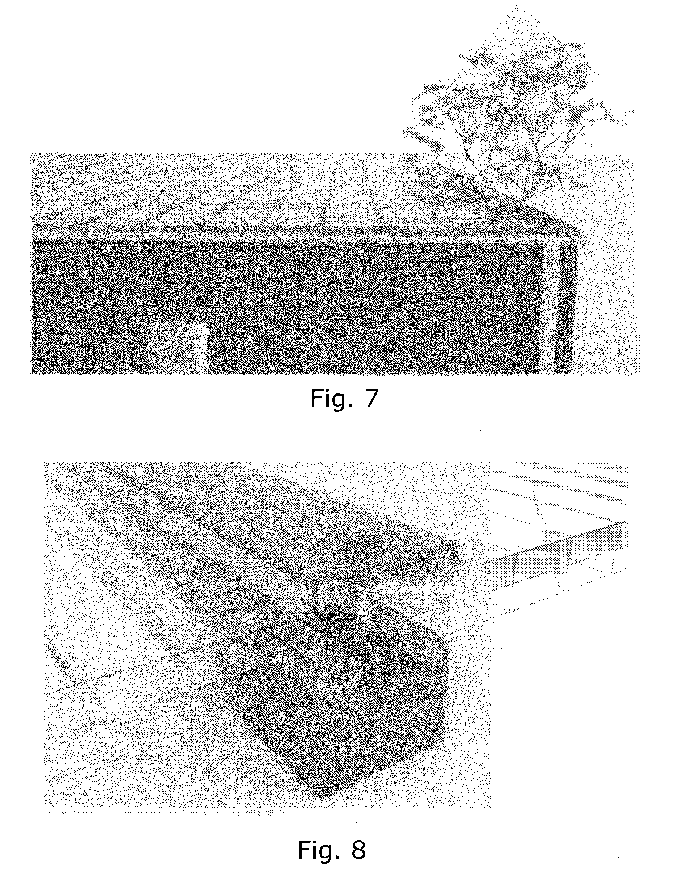

Fig. 7 serves to illustrate how the absorber system of the present invention can easily be fitted into a roof construction of a normal building, here illustrates as the absorber system covering an entire area of the roof. Normally available transparent upper panels are used as top panels constituting a surface of the roof. These panels are supported to provide at least the minimum strength as prescribed in the building regulation.

Fig. 8 illustrates the mounting of transparent upper panel above the solar thermal absorber, here shown as a double or triple layer of polycarbonate glazing. The glazing is ideally cut in full length of the roof for faster installation. In Fig. 8 it is shown how an example of a transparent upper panel of a 3-layer polycarbonate glazing is mounted in between a sandwich construction made of extruded black anodized aluminium profiles and silicone gaskets. The sandwich construction is held together with a hex screw.

The upper panel may have a thermo-chromatic coating thus making the glazing less transparent in case of overheating (e.g. >80 °C).

A specific embodiment of the solar power system has the following properties:
- The liquid container elements are in the form of transparent glass fiber and/or steel wire reinforced ETFE elements with a low emissivity coating applied for minimizing heat loss. The liquid container elements will cover the entire roof and be installed side by side in full length of the roof. The elements only require two joints per full lane of the element. The joint will consist of a single hose clamp ensuring a tight fit around the plumbing T-piece, using the absorber material itself as gasket. The joint can be installed with a single flat screwdriver.
- An absorber liquid having a mixture of water (60%) and glycol (40%) with a black colored thermo chromatic dye that will become transparent if heated above 95°C acting as a safety mechanism during system failure.
- A polished aluminum foil is used as light reflector mounted behind the ETFE elements and acting as a heat and radiation shield inside the solar roof during normal use and as a mirror device during system failure, where the black dyed absorber liquid becomes transparent because of overheating.

- An upper panel formed by double or triple layer of polycarbonate glazing (as in Fig. 8) with a thermo chromatic coating, making the glazing less transparent in case of overheating (e.g. >80°C). The glazing is ideally cut in full length of the roof for faster installation.
- A heat pump utilizing the relatively low temperature outlet from the solar roof during winter to create higher temperature water for domestic use (Figure 5).
- A power generator based on the ORC using the excess heat from the roof. The expander technology driving the generator will be based on the scroll expander principle.
- A 1.5 m³ thermal insulated water heat storage providing both hot water and heating for a household during all times of the year.
- An external radiator, such as a building-integrated air vented radiator, or a geothermal hose, for emitting low temperature waste heat and thereby increasing the overall efficiency of the ORC unit.
- An intelligent control and forecasting unit consisting of:
   ∘ A set of external sensors: pyranometer, temperature sensor, hygrometer, rain sensor, barometer and anemometer.
   ∘ A low power consuming hardware platform with a user friendly interface showing the user relevant information such as:
      - The electricity and heat entering the system.
      - The current, daily, weekly, monthly heat and power consumption.
      - The measurements from all the external sensors (solar intensity, temperature, humidity, rain intensity and atmospheric pressure).
      - Chill factor based on input from the anemometer and the rain sensor.
      - The weather forecast and predicted energy harvest the next 24 hours.
- An internet based forecasting software system using the input from the external sensors combined with the local weather forecasts provided online in order to accurately calculate the most efficient use of the heat pump in the colder months by the use of fuzzy logic.
- An anti snow mechanism circulating the hot water from the heat storage through the absorber system on the roof for a short period of time in case of snowfall during night.
- A safety system allowing the control unit to use the system circulation pumps alternatively to dispatch excessive heat directly in the external radiator in case of failure of the ORC unit.

It is to be understood, that the principles of the above specific embodiment can be utilized also for a solar thermal absorber being a non-transparent absorber type.

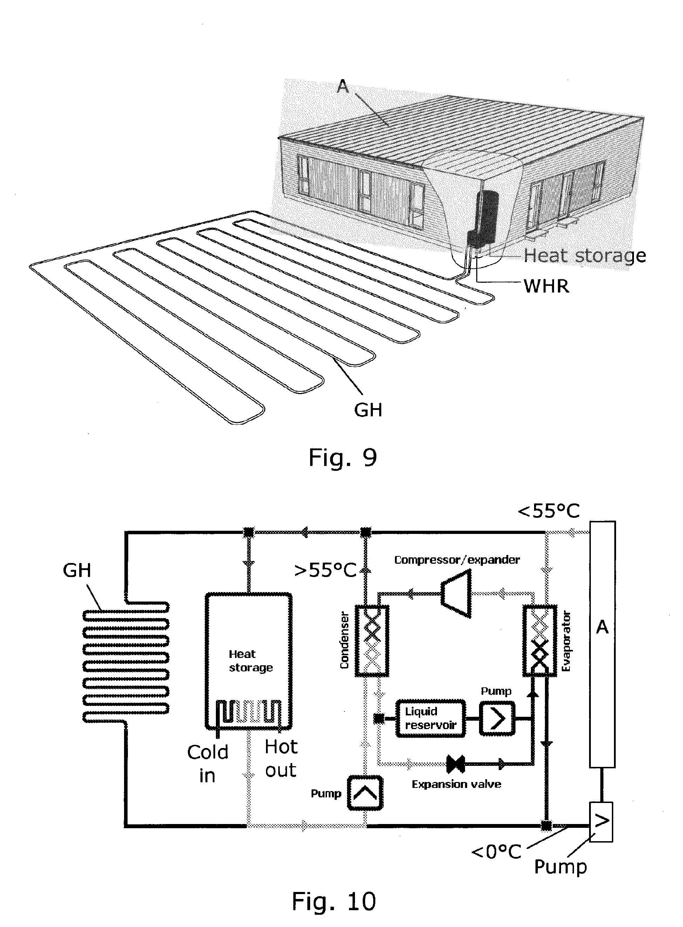

Fig. 9 illustrates a preferred system embodiment. A house has its total roof area covered by a solar thermal absorber A. The absorbers are mounted under an upper panel and above the roof insulation of the building. Further, the core system comprises a geothermal hose GH placed in the ground and thus surrounded by soil, such as a geothermal hose used in existing heat pump system and known by the skilled person. Both of the solar thermal absorber A and the geothermal hose GH are connected to one common heat storage in the form of a water tank placed inside the house. Further the core system includes a waste heat recovery system WHR also connected to the heat storage, the absorber A, and the geothermal hose GH which enables generation of electricity of surplus energy. The following 7 figures serve to illustrate examples of different modes of operation of one possible embodiments of such system to ensure efficient energy generation.

Fig. 10 shows a diagram of one system embodiment showing the absorber A connected to a core system comprising a geothermal hose GH, and a heat storage with a heat exchanger between a Cold in and Hot out liquid connection. A waste heat recovery circuit is here implemented with a combined compressor and expander machine based on a scroll compressor. The circuit can be operated in two modes, since the scroll compressor is connected to an electric machine which can function selectively as electric generator and as electric motor. Thus, one combined expander/compressor module can either work as a heat pump module, or work as an electric generator module.

In the heat pump mode of operation, the scroll compressor serves to provide a pressure in a heat pump cycle, and the scroll compressor is driven by the electric machine operated as an electric motor. A vaporized liquid is condensed in a condenser, and heat is then generated to the surroundings. Via an expansion valve or nozzle, the pressure is reduced. The liquid is vaporized in an evaporator thus taking heat from the surroundings. The pressure increases in the compressor, and the vaporized liquid is compressed, thereby increasing the temperature, and the circuit starts again.

In the electric generating mode of operation, the liquid receives heat energy in the evaporator, thus evaporating the liquid. The pressure from the resulting gas drives the scroll spiral which drives the electric generator and thus generates electricity. The gas is returned into a liquid in the condenser, and the liquid is collected in a liquid reservoir. A liquid pump serves to pump the liquid into the evaporator under high pressure.

According to a preferred implementation, the mode of operation is controlled by a three-way valve that serves to determine which one of 1) liquid reservoir and pump or 2) expansion valve to be connected. The intelligent controller preferably controls this three-way valve, predominantly based on a sensor input indicating a temperature of the absorber liquid outlet from the absorber A. At an outlet temperature of 75 °C or more, it is preferable to couple in the liquid reservoir and the pump and thus initiate the electric generating mode of operation. At lower outlet temperatures, the expansion valve is coupled in and the pump and reservoir are coupled out, and hereby the heat pump mode of operation is activated.

In the situation illustrated in Fig. 10, the outlet temperature from the absorber A is below 55 °C, and thus the expansion valve is coupled in, and a heat pump function is activated. The condenser, e.g. a plate heat exchanger, serves to transfer hot water to the heat storage tank.

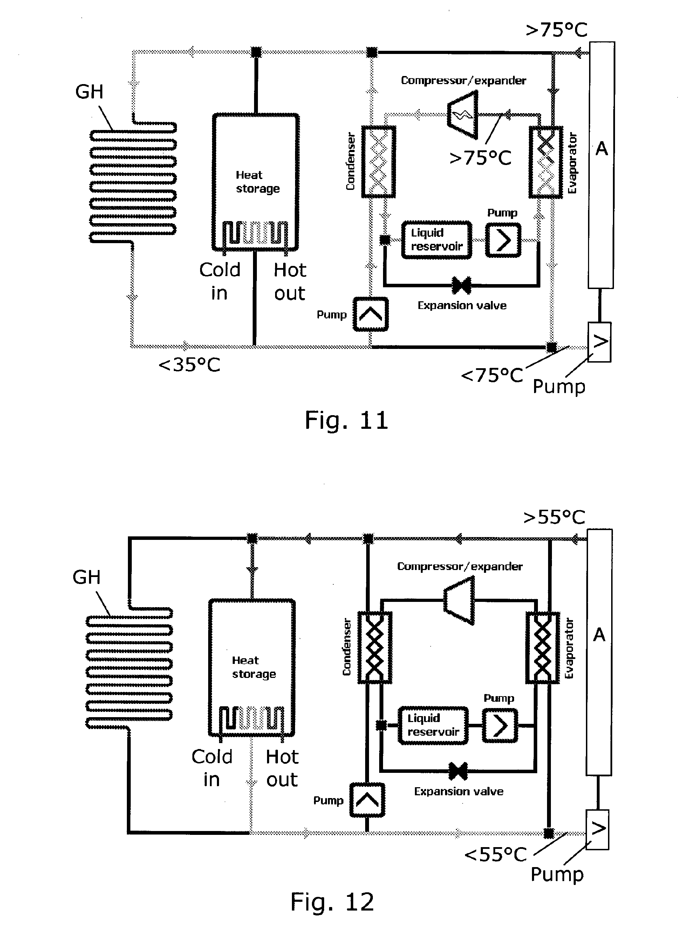

Fig. 11 illustrates the mode of operation, when the outlet temperature from the absorber A exceeds 75 °C. Here, the liquid reservoir and pump are activated, and the waste heat recovery circuit generates electricity. Instead of providing heat to the heat storage, the condenser is cooled by circulating liquid through the geothermal hose GH.

Fig. 12 illustrates an outlet temperature from the absorber A being within the range 55-75 °C. Here the goal is to transfer energy to the heat storage to maintain a minimum temperature of 55 °C in the heat storage tank. The waste heat recovery circuit is thus not activated.

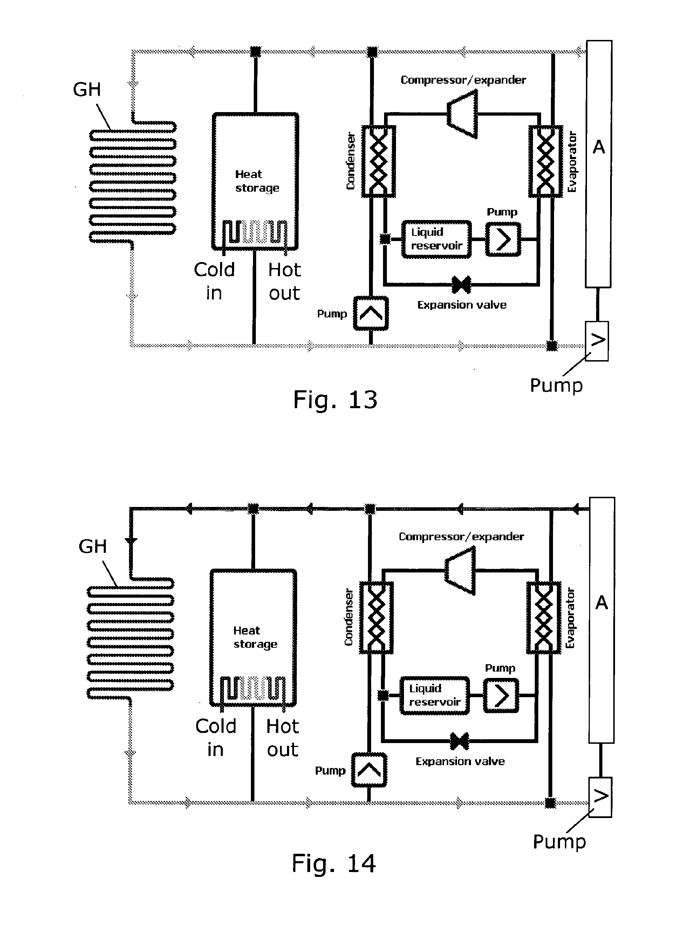

Fig. 13 illustrates a mode of operation which is advantageous during a summer night. The geothermal hose GH is cooled by circulating the absorber liquid through the absorber A. The soil around the geothermal hose GH is thus lowered, and this will increase the efficiency of the waste heat recovery circuit for the next day's operating by ensuring the highest possible temperature difference.

Fig. 14 illustrates another mode of operation where liquid is circulated through the geothermal hose GH and through the absorber A. However, this mode of operation may be used during winter to heat the roof and thus melt off snow or ice from the roof, so as to increase next day's solar absorber effect. If it is predicted that there will still be snow weather the next day, the intelligent controller may be programmed to avoid using energy for such operation.

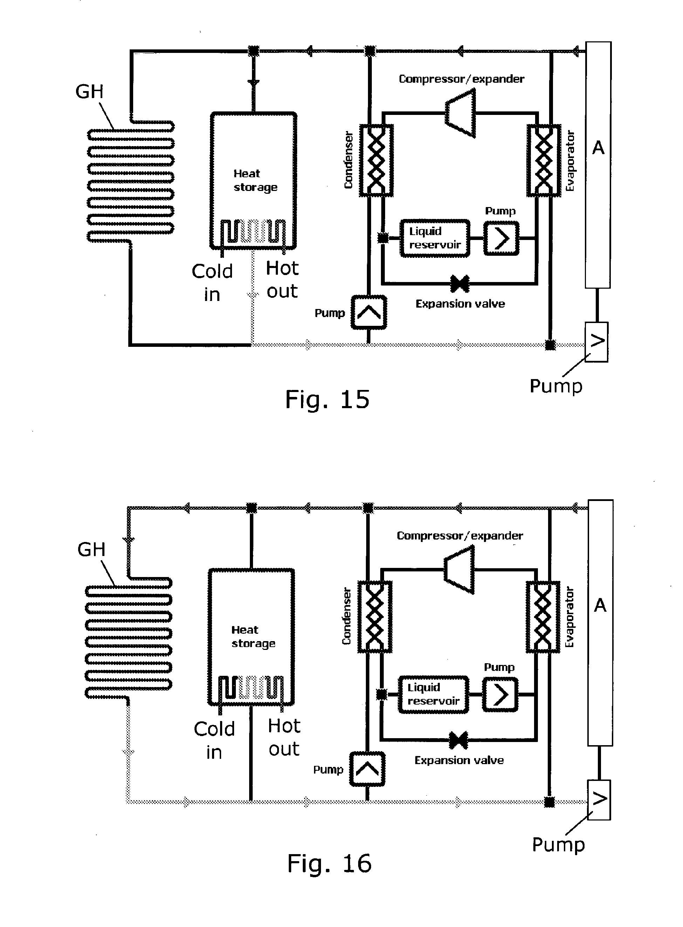

Fig. 15 illustrates another way of removing snow, namely to use energy from the heat storage to circulate hot water through the absorber A.

In case of consistently bad weather, the system may use the geothermal hose circulate liquid through the GH to provide energy to ensure that the absorber is not undercooled. Especially, the intelligent controller may select to switch between such mode of operation and the mode described in connection with Fig. 10, until the weather has improved.

Fig. 16 illustrates a mode of operation, if the intelligent controller detects a failure in the waste heat recovery circuit. In this case, the absorber liquid should be circulated through the geothermal hose GH and/or heat storage so as to prevent overheating. If the pump fails in addition, a thermo chromatic layer on the glazing covering the absorber on the roof will reflect incoming radiation and thus destroy the solar thermal absorption effect.

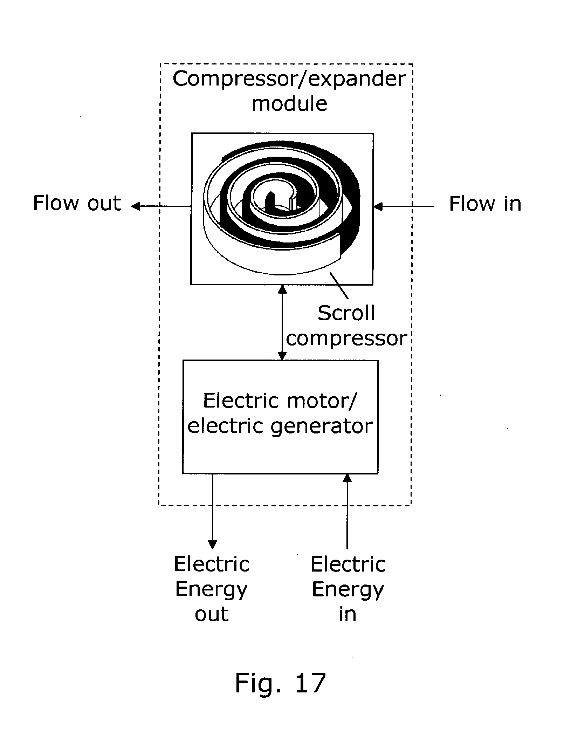

Fig. 17 illustrates a combined compressor and expander module based on an ORC machine with a scroll compressor, the function of which is already explained, and which is advantageous for use as a combined module in a waste heat recovery circuit that can operate in a heat pump mode or in an electric generating mode. Space is saved, since the combined module can be manufactured in a compact version. An electric machine can either receive or generate electric energy since it serves selectively as an electric motor and electric generator either driving the scroll compressor or being driven by the scroll element. Thus, a very compact single module with a flow in and flow out and with electric connections can be formed, thus occupying only a limited space in the user's house.

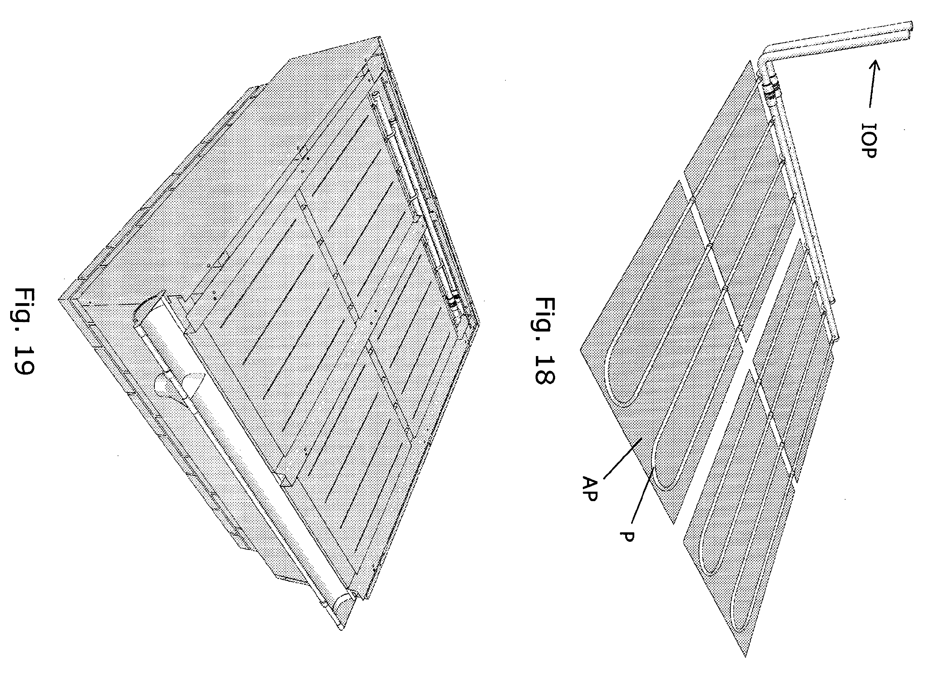

Fig. 18 shows a sketch of a specific absorber embodiment with a non-transparent absorber, here seen from below. A thin plane plate or sheet of aluminium, e.g. 0.1-2 mm thick, such as 0.4 mm thick, forms an absorber plate AP. A pipe P for transporting absorber liquid is fastened to the absorber plate AP in a way to provide a good thermal contact between pipe P and absorber plate AP. Especially, this may be done with a pipe P of an aluminium alloy which is welded to the absorber plate AP by means of ultrasound welding along the straight portions of the pipe P. The pipes may be 5-20 mmØ, such as 10 mmØ. The absorber plates AP may be provided in lengths of up to 6 m, however in other embodiments, the absorbers are smaller, such as a length of 50 cm. The pipe from a number of absorber plates AP are connected to common absorber liquid inlet pipes and outlet pipes IOP, e.g. in the form of pipes of 20-40 mmØ, such as 28 mmØ. Seen from above, the absorber plate AP has a generally plane surface. The surface of the upper side preferably has a selective coating, i.e. a coating providing a high thermal absorption, such as 95% or more, combined with a low energy emissivity, such as 5% or less. This provides an effective thermal absorption. The pipe P on each absorber panel has a layout ensuring a uniform distribution of temperature. As illustrated, this is achieved by providing panels with two separate pipes P for each absorber plate AP, thus providing for each panel, two separate sets of liquid inlets and outlets. Depending on the size of the absorber plate AP, more separate pipes P may be provided on each absorber panel. Also, the piping P of a number of absorber panels are preferably connected such that a uniform temperature distribution across the entire roof is ensured. In the illustrated embodiment, the pipe P layout is a combination of meander and harp configurations.

In Fig. 18, four absorber panels are interconnected to a common set of inlet and outlet pipes IOP, however it is to be understood that more panels may be used to form a complete roof solution.

Fig. 19 shows the same four panels as shown in Fig. 18, but here the panels are seen from above, where the straight welding line used to connect the pipe and absorber plate and visible. The four panels are seen mounted in a roof solution, and to allow visibility, the roof is shown without the intended transparent top panel covering the solar absorber panel.

To sum up, the invention provides a solar power system for use as a solar roofing concept based on an absorber system with a solar thermal absorber and a circulation system for circulating absorber liquid through the absorber and a core system which extracts energy from the absorber liquid and provides hot water to a building. An intelligent controller uses data about external conditions to control the core system, where both current conditions and predicted conditions are taken into account. The system can generate heat, hot water and electric energy to cover the need for a normal household. When excess heat is generated, the thermal energy can be used by an organic Rankine cycle (ORC) machine for electricity production. A forecasting and control unit using external weather measurements in combination with internet weather forecasts will by fuzzy logic calculate the optimum periods of time for use of the heat pump during the colder periods. Preferably, the intelligent controller can switch between different modes of operation of the system to optimized energy efficiency to match the actual working conditions. In embodiments, the system includes a geothermal hose also connected to the liquid system of the absorber system, thus providing a synergetic exchange of energy with the solar absorber.

Although the present invention has been described in connection with preferred embodiments, it is not intended to be limited to the specific form set forth herein. Rather, the scope of the present invention is limited only by the accompanying claims.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing from the invention as defined in the claims. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A solar power system for supplying energy to a building, the system comprising
- an absorber system (A) comprising
- a solar thermal absorber, and
- an absorber liquid arranged for absorbing solar energy and for flowing through the solar thermal absorber,
- a circulation system (B) arranged to transport the absorber liquid through the solar thermal absorber so as to transport absorbed energy away from the solar thermal absorber, and
- a core system including means for extracting energy from the absorber system (A), and a hot water supply system in connection with the core system and arranged to heat up water to be supplied to the building,
wherein the core system is controlled by an intelligent controller (E) using data about external conditions influencing operation of the solar power system with respect to both current conditions and with respect to predicted conditions,
wherein the solar power system is arranged such that surplus energy extracted in the core system is utilized for driving an electrical power generator arranged to generate electric power in response to the surplus energy, wherein the electrical power generator comprises an Organic Rankine Cycle generator, **characterized in that** the Organic Rankine Cycle generator is driven by a scroll or spiral compressor element connected to drive a rotary type electric generator so as to generate electric power, and wherein the electric generator is arranged to selectively serve as an electric motor to drive the scroll or spiral compressor element upon application of an electric drive current.

2. Solar power system according to claim 1, wherein the solar thermal absorber comprises a transparent liquid container.

3. Solar power system according to claim 2, wherein the transparent liquid container is arranged between a light reflector and a transparent upper panel.

4. Solar power system according to claim 2 or 3, wherein the transparent liquid container comprises one or more liquid container elements in the form of a flexible polymeric structure.

5. Solar power system according to any of the preceding claims, wherein the intelligent controller (E) is arranged to control a plurality of valves, so as to switch between first and second modes of operation of the Organic Rankine Cycle generator, wherein the Organic Rankine Cycle generator generates electricity in the first mode of operation, and wherein the Organic Rankine Cycle generator serves as a compressor to drive a flow in a heat pump system comprising a condenser and a radiator (R, GH) in the second mode of operation.

6. Solar power system according to any of the preceding claims, wherein the absorber system (A) comprises a transparent upper panel with a thermo-chromatic coating arranged to switch between a high transparency at lower temperatures and a low transparency state at higher temperatures.

7. Solar power system according to any of the preceding claims, wherein the absorber system (A) comprises an insulating layer below the solar thermal absorber forming a roof insulation of a building below the absorber system (A).

8. Solar power system according to any of the preceding claims, wherein the intelligent controller (E) is arranged to control the system so as to enter an electric power generating mode of operation, when a sensed outlet temperature of the absorber liquid is within a predefined interval.

9. Solar power system according to any of the preceding claims, wherein the solar thermal absorber comprises an absorber plate (AP), with a surface arranged to absorb solar energy, and wherein a pipe (P) is attached to the absorber plate (AP) so as to provide thermal contact with the absorber plate (AP) in order to transfer absorbed energy to the absorber liquid when flowing through the pipe (P).

10. Solar power system according to claim 9, wherein the absorber plate (AP) is made of aluminium, and wherein the pipe (P) is attached to the absorber plate (AP) by means of welding.

11. Solar absorber according to claim 10, wherein the pipe (P) is made of an aluminium alloy, and wherein the surface of the absorber plate (AP) is coated by a selective coating.

## Patentansprüche

1. Solarstromsystem zur Versorgung eines Gebäudes mit Energie, wobei das System umfasst
- ein Absorbersystem (A), umfassend
- einen solarthermischen Absorber und
- eine Absorberflüssigkeit, die zum Absorbieren von Sonnenenergie und zum Strömen durch den solarthermischen Absorber beschaffen ist,
- ein Zirkulationssystem (B), das zum Transport der Absorberflüssigkeit durch den solarthermischen Absorber beschaffen ist, um die absorbierte Energie weg vom solarthermischen Absorber zu transportieren, und
- ein Kernsystem mit Mitteln zum Extrahieren von Energie aus dem Absorbersystem (A) und ein Warmwasserversorgungssystem in Verbindung mit dem Kernsystem, das zum Erwärmen von Wasser, mit dem das Gebäude versorgt wird, beschaffen ist,
wobei das Kernsystem unter Verwendung von Daten über den Betrieb des Solarstromsystems beeinflussende Außenbedingungen hinsichtlich aktueller Bedingungen und hinsichtlich vorhergesagter Bedingungen von einer intelligenten Steuereinheit (E) gesteuert wird,
wobei das Solarstromsystem derart beschaffen ist, dass im Kernsystem extrahierte Überschussenergie zum Antrieb eines zum Erzeugen von elektrischem Strom als Reaktion auf die Überschussenergie beschaffenen Stromgenerators verwendet wird, wobei der Stromgenerator einen Organic-Rankine-Cycle-Generator umfasst, **dadurch gekennzeichnet, dass** der Organic-Rankine-Cycle-Generator zum Erzeugen von elektrischem Strom von einem Spiral- oder Schraubenkompressorelement getrieben wird, das zum Antreiben eines rotierenden Stromerzeugers verbunden ist, und wobei der Stromerzeuger dazu beschaffen ist, nach Anlegen eines elektrischen Antriebsstroms selektiv als Elektromotor zum Antrieb des Spiral- oder Schraubenkompressorelements zu dienen.

2. Solarstromsystem nach Anspruch 1, wobei der solarthermische Absorber einen durchsichtigen Flüssigkeitsbehälter umfasst.

3. Solarstromsystem nach Anspruch 2, wobei der durchsichtige Flüssigkeitsbehälter zwischen einem Lichtreflektor und einer durchsichtigen oberen Platte angeordnet ist.

4. Solarstromsystem nach Anspruch 2 oder 3, wobei der durchsichtige Flüssigkeitsbehälter ein oder mehrere Flüssigkeitsbehälterelemente in Form einer flexiblen polymeren Struktur umfasst.

5. Solarstromsystem nach einem der vorhergehenden Ansprüche, wobei die intelligente Steuereinheit (E) dazu beschaffen ist, eine Mehrzahl von Ventilen zu steuern, um zwischen einem ersten und einem zweiten Betriebszustand des Organic-Rankine-Cycle-Generators umzuschalten, wobei der Organic-Rankine-Cycle-Generator im ersten Betriebszustand Strom erzeugt und wobei der Organic-Rankine-Cycle-Generator im zweiten Betriebszustand als Kompressor zum Antrieb einer Strömung in einem Wärmepumpensystem umfassend einen Kondensator und einen Radiator (R, GH) dient.

6. Solarstromsystem nach einem der vorhergehenden Ansprüche, wobei das Absorbersystem (A) eine durchsichtige obere Platte mit einer thermochromatischen Beschichtung umfasst, die zum Wechsel zwischen einem Zustand mit hoher Transparenz bei niedrigeren Temperaturen und einem Zustand mit niedriger Transparenz bei höheren Temperaturen beschaffen ist.

7. Solarstromsystem nach einem der vorhergehenden Ansprüche, wobei das Absorbersystem (A) eine Isolierschicht unter dem solarthermischen Absorber umfasst, die eine Dachdämmung eines Gebäudes unter dem Absorbersystem (A) bildet.

8. Solarstromsystem nach einem der vorhergehenden Ansprüche, wobei die intelligente Steuereinheit (E) dazu beschaffen ist, das System derart zu steuern, dass der Betriebszustand Stromerzeugung eingenommen wird, wenn eine gemessene Außentemperatur der Absorberflüssigkeit innerhalb eines vorbestimmten Intervalls liegt.

9. Solarstromsystem nach einem der vorhergehenden Ansprüche, wobei der solarthermische Absorber eine Absorberplatte (AP) mit einer Oberfläche umfasst, die zum Absorbieren von Sonnenenergie beschaffen ist, und wobei zur Bereitstellung eines thermischen Kontakts mit der Absorberplatte (AP) ein Rohr (P) an der Absorberplatte (AP) befestigt ist, um absorbierte Energie auf die Absorberflüssigkeit zu übertragen, wenn diese durch das Rohr (P) fließt.

10. Solarstromsystem nach Anspruch 9, wobei die Absorberplatte (AP) aus Aluminium hergestellt ist und wobei das Rohr (P) durch Schweißen an der Absorberplatte (AP) befestigt ist.

11. Solarstromsystem nach Anspruch 10, wobei das Rohr (P) aus einer Aluminiumlegierung hergestellt ist und wobei die Oberfläche der Absorberplatte (AP) mit einer selektiven Beschichtung beschichtet ist.

## Revendications

1. Système solaire pour alimenter en énergie un bâtiment, le système comprenant
- un système absorbeur (A) comprenant
- un absorbeur thermique solaire, et
- un liquide absorbeur disposé pour absorber l'énergie solaire et pour s'écouler dans l'absorbeur thermique solaire,
- un système de circulation (B) disposé pour transporter le liquide absorbeur dans l'absorbeur thermique solaire de manière à transporter l'énergie absorbée à l'extérieur de l'absorbeur thermique solaire, et
- un système central incluant un moyen pour extraire de l'énergie du système absorbeur (A), et un système d'alimentation en eau chaude raccordé au système central et disposé pour réchauffer l'eau devant être fournie au bâtiment,
dans lequel le système central est commandé par un dispositif de commande intelligent (E) utilisant des données relatives aux conditions externes influant sur le fonctionnement du système solaire, tant pour les conditions en cours que pour les conditions prévues,
dans lequel le système solaire est disposé de manière à ce que le surplus d'énergie extrait dans le système central soit utilisé pour entraîner un générateur d'énergie électrique disposé pour générer de l'énergie électrique en réponse au surplus d'énergie, dans lequel le générateur d'énergie électrique comprend un générateur à cycle de Rankine organique, **caractérisé en ce que** le générateur à cycle de Rankine organique est entraîné par un élément compresseur à volute ou à spirale raccordé pour entraîner un générateur électrique de type rotatif de manière à générer de l'énergie électrique, et dans lequel le générateur électrique est disposé pour servir, de manière sélective, de moteur électrique pour entraîner l'élément compresseur à volute ou à spirale lors de l'application d'un courant électrique d'attaque.

2. Système solaire selon la revendication 1, dans lequel l'absorbeur thermique solaire comprend un réservoir de liquide transparent.

3. Système solaire selon la revendication 2, dans lequel le réservoir de liquide transparent est disposé entre un réflecteur de lumière et un panneau supérieur transparent.

4. Système solaire selon la revendication 2 ou 3, dans lequel le réservoir de liquide transparent comprend un ou plusieurs éléments de réservoir de liquide sous la forme d'une structure polymère souple.

5. Système solaire selon l'une quelconque des revendications précédentes, dans lequel le dispositif de commande intelligent (E) est disposé pour commander plusieurs vannes, de manière à alterner entre un premier et un deuxième mode de fonctionnement du générateur à cycle de Rankine organique, dans lequel, dans le premier mode de fonctionnement, le générateur à cycle de Rankine organique génère de l'électricité, et dans lequel, dans le deuxième mode de fonctionnement, le générateur à cycle de Rankine organique sert de compresseur pour entraîner un écoulement dans un système de pompe à chaleur comprenant un condensateur et un radiateur (R, GH).

6. Système solaire selon l'une quelconque des revendications précédentes, dans lequel le système absorbeur (A) comprend un panneau supérieur transparent avec un revêtement thermo-chromatique disposé pour alterner entre un état de haute transparence aux basses températures et un état de faible transparence aux températures élevées.

7. Système solaire selon l'une quelconque des revendications précédentes, dans lequel le système absorbeur (A) comprend une couche isolante sous l'absorbeur thermique solaire formant une isolation de toiture d'un bâtiment sous le système absorbeur (A).

8. Système solaire selon l'une quelconque des revendications précédentes, dans lequel le dispositif de commande intelligent (E) est disposé pour commander le système de manière à entrer dans un mode de fonctionnement générant de l'énergie électrique quand une température de sortie détectée du liquide absorbeur se situe dans un intervalle prédéfini.

9. Système solaire selon l'une quelconque des revendications précédentes, dans lequel l'absorbeur thermique solaire comprend une plaque absorbeuse (AP), dont une surface est disposée pour absorber l'énergie solaire, et dans lequel un tuyau (P) est fixé sur la plaque absorbeuse (AP) de manière à assurer un contact thermique avec la plaque absorbeuse (AP) afin de transférer l'énergie absorbée vers le liquide absorbeur quand celui-ci s'écoule dans le tuyau (P).

10. Système solaire selon la revendication 9, dans lequel la plaque absorbeuse (AP) est constituée d'aluminium, et dans lequel le tuyau (P) est fixé sur la plaque absorbeuse (AP) par soudure.

11. Absorbeur solaire selon la revendication 10, dans lequel le tuyau (P) est constitué d'un alliage d'aluminium, et dans lequel la surface de la plaque absorbeuse (AP) est recouverte d'un revêtement sélectif.
